# EUROPEAN PATENT APPLICATION

(11) **EP 4 827 046 A1**
(43) Date of publication of application: **21.10.2026**
(21) Application number: 24906507.9
(22) Date of filing: 20.12.2024
(51) Int. Cl.: H04L 9/40

(54) **ACCESS CONTROL METHOD BASED ON CLOUD MANAGEMENT PLATFORM, AND CLOUD MANAGEMENT PLATFORM**

(30) Priority: 22.12.2023 CN 202311785301; 26.04.2024 CN 202410516416
(71) Applicant: Huawei Cloud Computing Technologies Co., Ltd., Gui'an New District, Guizhou 550025 (CN)
(72) Inventor: JIANG, Shibiao, Guiyang, Guizhou 550025 (CN); LI, Jun, Guiyang, Guizhou 550025 (CN); LIN, Weibo, Guiyang, Guizhou 550025 (CN); HE, Zhu, Guiyang, Guizhou 550025 (CN)
(74) Representative: Huawei European IPR
(86) International application number: PCT/CN2024/140852
(87) International publication number: WO 2025/131032

(57) **Abstract**

This application discloses an access control method based on a cloud management platform, and a cloud management platform, so that a tenant can manage mutual access between a plurality of cloud instances, thereby improving tenant experience. The method in this application includes: Among a plurality of cloud instances serving a tenant, when a first cloud instance needs to access a second cloud instance, the first cloud instance sends a credential acquisition request to a cloud management platform, where the credential acquisition request carries an access control policy for the plurality of cloud instances, the access control policy is provided by the tenant for the first cloud instance, and the access control policy is used to indicate at least one cloud instance in the plurality of cloud instances that is allowed to obtain a credential. Then, the cloud management platform may detect, based on the credential acquisition request, whether the first cloud instance is in the at least one cloud instance indicated by the access control policy. If the first cloud instance is in the at least one cloud instance indicated by the access control policy, the cloud management platform sends the credential of the tenant to the first cloud instance, so that the first cloud instance accesses the second cloud instance based on the credential of the tenant.

## Description

### TECHNICAL FIELD

Embodiments of this application relate to the field of cloud technologies, and in particular, to an access control method based on a cloud management platform, and a cloud management platform.

### BACKGROUND

With the rapid development of cloud technologies, more and more tenants choose to deploy cloud services on the cloud to process their own services. Generally, when a tenant often needs to invoke a plurality of cloud services to process its services. Therefore, communication occurs among a plurality of cloud instances used to deploy the plurality of cloud services, thereby forming a communication chain.

In related technologies, a cloud service system includes a cloud management platform and a plurality of cloud instances that provide cloud services for tenants. The cloud management platform may independently define access relationships between the plurality of cloud instances according to access control requirements of a tenant. For example, the cloud management platform may specify that a first cloud instance in the plurality of cloud instances is allowed to access a second cloud instance in the plurality of cloud instances, while the first cloud instance is not allowed to access a third cloud instance in the plurality of cloud instances. When the tenant has a data processing requirement, because data processing further needs to be jointly completed by the first cloud instance and the second cloud instance, after the tenant accesses the first cloud instance, the first cloud instance queries the cloud management platform whether the first cloud instance is allowed to access the second cloud instance. The cloud management platform may allow the first cloud instance to access the second cloud instance, so as to meet the data processing requirements of the tenant.

In the foregoing process, because the access relationships are defined by the cloud management platform, the access relationships are a black box to the tenant. As a result, the tenant cannot actively control the access relationships between the plurality of cloud instances, resulting in poor tenant experience.

### SUMMARY

Embodiments of this application provide an access control method based on a cloud management platform, and a cloud management platform, so that a tenant can manage mutual access between a plurality of cloud instances, thereby improving tenant experience.

A first aspect of embodiments of this application provides an access control method based on a cloud management platform, where a cloud management platform configured to implement the method can manage a plurality of cloud instances that provide a cloud service to a tenant, and the plurality of cloud instances can communicate with each other based on a credential of the tenant. The method includes the following.

In the plurality of cloud instances serving the tenant, when a first cloud instance needs to access the second cloud instance, the first cloud instance may send a credential acquisition request to the cloud management platform, where the credential acquisition request is used to indicate an access control policy of the tenant for the plurality of cloud instances, the access control policy is provided by the tenant for the first cloud instance, and the access control policy is used to indicate at least one cloud instance in the plurality of cloud instances that is allowed to obtain a credential.

After obtaining the credential acquisition request from the first cloud instance, the cloud management platform may parse the credential acquisition request, to obtain the access control policy. In this case, the cloud management platform may detect whether the first cloud instance is in the at least one cloud instance indicated by the access control policy. If the first cloud instance is in the at least one cloud instance, the cloud management platform sends the credential of the tenant to the first cloud instance, so that the first cloud instance accesses the second cloud instance based on the credential of the tenant.

It can be learned from the foregoing method that, in the plurality of cloud instances serving the tenant, the at least one cloud instance to which the credential of the tenant can be granted is specified by the tenant, and the at least one cloud instance that has been granted may obtain the credential of the tenant from the cloud management platform, to access remaining cloud instances. In other words, access relationships between the plurality of cloud instances are customized by the tenant. Therefore, whether the first cloud instance in the plurality of cloud instances can access the second cloud instance is set by the tenant in advance, and is completely set based on an access control intention of the tenant. In this way, the tenant can actively control the first cloud instance, which helps the tenant manage mutual access between the plurality of cloud instances, thereby improving experience of the tenant, and further ensuring data security of the tenant on the cloud instance.

In a possible implementation, the access control policy is used to indicate a cloud instance trustlist set by the tenant, the cloud instance trustlist includes at least one of the plurality of cloud instances, and that the cloud management platform detects, based on the credential acquisition request, whether the first cloud instance is in the at least one cloud instance indicated by the access control policy includes: The cloud management platform detects, based on the credential acquisition request, whether the first cloud instance is in the cloud instance trustlist indicated by the access control policy. In the foregoing implementation, after receiving the credential acquisition request sent by the first cloud instance, the cloud management platform may parse the request to obtain the access control policy that is formulated by the tenant for the plurality of cloud instances. When the access control policy includes the cloud instance trustlist set by the tenant, because the cloud instance trustlist includes at least one cloud instance selected by the tenant from the plurality of cloud instances, the cloud management platform detects whether the first cloud instance is in the cloud instance trustlist. If the first cloud instance is in the cloud instance trustlist, the cloud management platform may provide the credential of the tenant for the first cloud instance. Therefore, the first cloud instance may access the second cloud instance by using the credential of the tenant.

In a possible implementation, each cloud instance includes at least one interface, the credential acquisition request is further used to indicate an interface of the first cloud instance invoked by the tenant, the access control policy is used to indicate an interface trustlist set by the tenant, the interface trustlist includes an interface of at least one cloud instance in the plurality of cloud instances, and that the cloud management platform detects, based on the credential acquisition request, whether the first cloud instance is in the at least one cloud instance indicated by the access control policy includes: The cloud management platform detects, based on the credential acquisition request, whether the interface of the first cloud instance invoked by the tenant is in the interface trustlist indicated by the access control policy. In the foregoing implementation, after receiving the credential acquisition request sent by the first cloud instance, the cloud management platform may parse the request to obtain the interface of the first cloud instance invoked by the tenant and the access control policy formulated by the tenant for the plurality of cloud instances. When the access control policy includes the interface trustlist set by the tenant, because the interface trustlist includes the interface of the at least one cloud instance selected by the tenant from the interfaces of the plurality of cloud instances, the cloud management platform may detect whether the interface of the first cloud instance invoked by the tenant is in the interface trustlist. If the interface of the first cloud instance invoked by the tenant is in the interface trustlist, the cloud management platform may provide the credential of the tenant for the first cloud instance. Therefore, the first cloud instance may access the second cloud instance by using the credential of the tenant.

In a possible implementation, the access control policy is used to indicate an identity of the tenant, an identity trustlist for the first cloud instance is preset in the cloud management platform, the identity trustlist includes a plurality of preset identities, and that the cloud management platform detects, based on the credential acquisition request, whether the first cloud instance is in the at least one cloud instance indicated by the access control policy includes: The cloud management platform detects, based on the credential acquisition request, whether the identity indicated by the access control policy is in the identity trustlist. In the foregoing implementation, after receiving the credential acquisition request sent by the first cloud instance, the cloud management platform may parse the request to obtain the access control policy that is formulated by the tenant for the plurality of cloud instances. When the access control policy includes the identity used by the tenant to access the first cloud instance, because the identity trustlist for the first cloud instance is preset in the cloud management platform, the cloud management platform may detect whether the identity used by the tenant to access the first cloud instance is in the identity trustlist for the first cloud instance. If the identity used by the tenant to access the first cloud instance is in the identity trustlist for the first cloud instance, the cloud management platform may provide the credential of the tenant for the first cloud instance. Therefore, the first cloud instance may access the second cloud instance by using the credential of the tenant.

In a possible implementation, the access control policy is used to indicate a communication duration set by the tenant and a moment at which the tenant accesses the first cloud instance, and that the cloud management platform detects, based on the credential acquisition request, whether the first cloud instance is in the at least one cloud instance indicated by the access control policy includes: The cloud management platform detects, based on the credential acquisition request, whether a difference between the moment indicated by the access control policy and a current moment is less than the communication duration indicated by the access control policy. In the foregoing implementation, after receiving the credential acquisition request sent by the first cloud instance, the cloud management platform may parse the request to obtain the access control policy that is formulated by the tenant for the plurality of cloud instances. When the access control policy includes the moment at which the tenant accesses the first cloud instance and a communication duration of an entire communication link set by the tenant, the cloud management platform may calculate the difference between the moment at which the tenant accesses the first cloud instance and the current moment, and detect whether the difference is less than the communication duration of the entire communication link set by the tenant. If the difference is less than the communication duration, the cloud management platform may provide the credential of the tenant for the first cloud instance. Therefore, the first cloud instance may access the second cloud instance by using the credential of the tenant.

In a possible implementation, the access control policy is used to indicate a feasible communication path set by the tenant between the tenant and the first cloud instance, and that the cloud management platform detects, based on the credential acquisition request, whether the first cloud instance is in the at least one cloud instance indicated by the access control policy includes: The cloud management platform detects, based on the credential acquisition request, whether a current communication path between the tenant and the first cloud instance matches the feasible communication path indicated by the access control policy. In the foregoing implementation, after receiving the credential acquisition request sent by the first cloud instance, the cloud management platform may parse the request to obtain the access control policy that is formulated by the tenant for the plurality of cloud instances. When the access control policy includes the feasible communication path between the tenant and the first cloud instance, the cloud management platform may detect whether the current communication path between the tenant and the first cloud instance matches the feasible communication path between the tenant and the first cloud instance. If the two paths match, the cloud management platform may provide the credential of the tenant for the first cloud instance. Therefore, the first cloud instance may access the second cloud instance by using the credential of the tenant.

In a possible implementation, the access control policy is further used to indicate a signature of the access control policy, the signature is obtained by the tenant performing a signing operation on the access control policy, and that the cloud management platform detects, based on the credential acquisition request, whether the first cloud instance is in the at least one cloud instance indicated by the access control policy includes: The cloud management platform performs, based on the credential acquisition request, a signature verification operation on the signature indicated by the access control policy; and if the signature verification operation succeeds, the cloud management platform detects whether the first cloud instance is in the at least one cloud instance indicated by the access control policy. In the foregoing implementation, after receiving the credential acquisition request sent by the first cloud instance, the cloud management platform may parse the request to obtain the access control policy that is formulated by the tenant for the plurality of cloud instances. The access control policy may include the signature of the access control policy, and the signature is obtained by the tenant by performing the signing operation on remaining fields included in the access control policy. In this case, the cloud management platform may first perform the signature verification operation on the signature. If the signature verification operation succeeds, the cloud management platform detects whether the credential of the tenant can be provided for the first cloud instance.

In a possible implementation, the plurality of cloud instances are any one of the following: a physical server, a virtual machine, a container, a micro virtual machine, and a bare metal server.

A second aspect of embodiments of this application provides a cloud management platform, where the cloud management platform is configured to manage a plurality of cloud instances that provide a cloud service to a tenant, the plurality of cloud instances can communicate with each other based on a credential of the tenant, and the cloud management platform includes: a receiving module, configured to receive a credential acquisition request sent by a first cloud instance in the plurality of cloud instances, where the credential acquisition request is used to indicate an access control policy for the plurality of cloud instances, the access control policy is provided by the tenant to the first cloud instance, and the access control policy is used to indicate at least one cloud instance in the plurality of cloud instances that is allowed to obtain a credential; and a detection module, configured to detect, based on the credential acquisition request, whether the first cloud instance is in the at least one cloud instance indicated by the access control policy, and if the first cloud instance is in the at least one cloud instance indicated by the access control policy, the cloud management platform is configured to send the credential to the first cloud instance, where the credential is used by the first cloud instance to access a second cloud instance in the plurality of cloud instances.

In a possible implementation, the access control policy is used to indicate a cloud instance trustlist set by the tenant, the cloud instance trustlist includes at least one of the plurality of cloud instances, and the detection module is configured to detect, based on the credential acquisition request, whether the first cloud instance is in the cloud instance trustlist indicated by the access control policy.

In a possible implementation, each cloud instance includes at least one interface, the credential acquisition request is further used to indicate an interface of the first cloud instance invoked by the tenant, the access control policy is used to indicate an interface trustlist set by the tenant, the interface trustlist includes an interface of at least one cloud instance in the plurality of cloud instances, and the detection module is configured to detect, based on the credential acquisition request, whether the interface of the first cloud instance invoked by the tenant is in the interface trustlist indicated by the access control policy.

In a possible implementation, the access control policy is used to indicate an identity of the tenant, an identity trustlist for the first cloud instance is preset in the cloud management platform, the identity trustlist includes a plurality of preset identities, and the detection module is configured to detect, based on the credential acquisition request, whether the identity indicated by the access control policy is in the identity trustlist.

In a possible implementation, the access control policy is used to indicate a communication duration set by the tenant and a moment at which the tenant accesses the first cloud instance, and the detection module is configured to detect, based on the credential acquisition request, whether a difference between the moment indicated by the access control policy and a current moment is less than the communication duration indicated by the access control policy.

In a possible implementation, the access control policy is used to indicate a feasible communication path set by the tenant between the tenant and the first cloud instance, and the detection module is configured to detect, based on the credential acquisition request, whether a current communication path between the tenant and the first cloud instance matches the feasible communication path indicated by the access control policy.

In a possible implementation, the access control policy is further used to indicate a signature of the access control policy, the signature is obtained by the tenant performing a signing operation on the access control policy, and the detection module is configured to: perform, based on the credential acquisition request, a signature verification operation on the signature indicated by the access control policy; and if the signature verification operation succeeds, detect whether the first cloud instance is in the at least one cloud instance indicated by the access control policy.

In a possible implementation, the plurality of cloud instances are any one of the following: a physical server, a virtual machine, a container, a micro virtual machine, and a bare metal server.

A third aspect of embodiments of this application provides a compute device cluster. The compute device cluster includes at least one compute device, and each compute device includes a processor and a memory. The memory is configured to store instructions. The processor is configured to cause, according to the instructions, the compute device cluster to perform the method according to any one of the first aspect or the possible implementations of the first aspect.

A fourth aspect of embodiments of this application provides a computer storage medium. The computer storage medium stores one or more instructions. When the instructions are executed by one or more computers, the one or more computers are caused to perform the method according to any one of the first aspect or the possible implementations of the first aspect.

A fifth aspect of embodiments of this application provides a computer program product. The computer program product stores instructions, and when the instructions are executed by a computer, the computer is caused to perform the method according to any one of the first aspect or the possible implementations of the first aspect.

In this embodiment of this application, among a plurality of cloud instances serving a tenant, when a first cloud instance needs to access a second cloud instance, the first cloud instance sends a credential acquisition request to a cloud management platform, where the credential acquisition request carries an access control policy for the plurality of cloud instances, the access control policy is provided by the tenant for the first cloud instance, and the access control policy is used to indicate at least one cloud instance in the plurality of cloud instances serving the tenant that is allowed to obtain a credential. Then, the cloud management platform may parse the credential acquisition request to obtain the access control policy. Therefore, the cloud management platform may detect whether the first cloud instance is in the at least one cloud instance indicated by the access control policy. If the first cloud instance is in the at least one cloud instance indicated by the access control policy, the cloud management platform sends the credential of the tenant to the first cloud instance, so that the first cloud instance accesses the second cloud instance based on the credential of the tenant. In the foregoing process, in the plurality of cloud instances serving the tenant, the at least one cloud instance to which the credential of the tenant can be granted is specified by the tenant, and the at least one cloud instance that has been granted may obtain the credential of the tenant from the cloud management platform, to access remaining cloud instances. In other words, access relationships between the plurality of cloud instances are customized by the tenant. Therefore, whether the first cloud instance in the plurality of cloud instances can access the second cloud instance is set by the tenant in advance, and is completely set based on an access control intention of the tenant. In this way, the tenant can actively control the first cloud instance, which helps the tenant manage mutual access between the plurality of cloud instances, thereby improving experience of the tenant, and further ensuring data security of the tenant on the cloud instance.

### BRIEF DESCRIPTION OF DRAWINGS

FIG. 1 is a diagram of a structure of a cloud service system according to an embodiment of this application;
FIG. 2 is a schematic flowchart of an access control method based on a cloud management platform according to an embodiment of this application;
FIG. 3 is a diagram of a payload according to an embodiment of this application;
FIG. 4 is a diagram of another structure of a cloud service system according to an embodiment of this application;
FIG. 5 is a diagram of still another structure of a cloud service system according to an embodiment of this application;
FIG. 6 is a diagram of yet another structure of a cloud service system according to an embodiment of this application;
FIG. 7 is a diagram of still yet another structure of a cloud service system according to an embodiment of this application;
FIG. 8 is a diagram of further another structure of a cloud service system according to an embodiment of this application;
FIG. 9 is a diagram of a structure of a cloud management platform according to an embodiment of this application;
FIG. 10 is a diagram of a structure of a compute device according to an embodiment of this application;
FIG. 11 is a diagram of a structure of a compute device cluster according to an embodiment of this application; and
FIG. 12 is a diagram of a computer cluster in which computer devices are connected through a network according to an embodiment of this application.

### DESCRIPTION OF EMBODIMENTS

Embodiments of this application provide an access control method based on a cloud management platform, and a cloud management platform, so that a tenant can manage mutual access between a plurality of cloud instances, thereby improving tenant experience.

In the specification, claims, and accompanying drawings of this application, the terms "first", "second", and so on are intended to distinguish between similar objects but do not necessarily indicate a specific order or sequence. It should be understood that the terms used in such a way are interchangeable in proper circumstances, which is merely a discrimination manner that is used when objects having a same attribute are described in embodiments of this application. In addition, the terms "include", "contain" and any other variants mean to cover the non-exclusive inclusion, so that a process, method, system, product, or device that includes a series of units is not necessarily limited to those units, but may include other units not expressly listed or inherent to such a process, method, system, product, or device.

With the rapid development of cloud technologies, more and more tenants choose to deploy cloud services on the cloud to process their own services. Generally, when a tenant often needs to invoke a plurality of cloud services to process its services. Therefore, communication occurs among a plurality of cloud instances used to deploy the plurality of cloud services, thereby forming a communication chain.

In related technologies, a cloud service system includes a cloud management platform and a plurality of cloud instances that provide cloud services for tenants. The cloud management platform may independently define access relationships between the plurality of cloud instances according to access control requirements of a tenant. For example, the cloud management platform may specify that a first cloud instance in the plurality of cloud instances is allowed to access a second cloud instance in the plurality of cloud instances, while the first cloud instance is not allowed to access a third cloud instance in the plurality of cloud instances. When the tenant has a data processing requirement, because data processing further needs to be jointly completed by the first cloud instance and the second cloud instance, after the tenant accesses the first cloud instance, the first cloud instance queries the cloud management platform whether the first cloud instance is allowed to access the second cloud instance. The cloud management platform may allow the first cloud instance to access the second cloud instance, so as to meet the data processing requirements of the tenant. For example, it is assumed that a data storage service is deployed on a cloud instance 1, and a data encryption service is deployed on a cloud instance 2. After data of the tenant is stored in the cloud instance 1, because the cloud management platform specifies that the cloud instance 1 can invoke the cloud instance 2 to encrypt the data, the cloud instance 1 may invoke the cloud instance 2 to encrypt the data of the tenant, to obtain encrypted data. Therefore, the data of the tenant is stored in the cloud instance 1 in an encrypted form.

In the foregoing process, because the access relationships are defined by the cloud management platform, the access relationships are a black box to the tenant. As a result, the tenant cannot actively control the access relationships between the plurality of cloud instances, resulting in poor tenant experience. In addition, data of the tenant on the cloud instance may have a security problem.

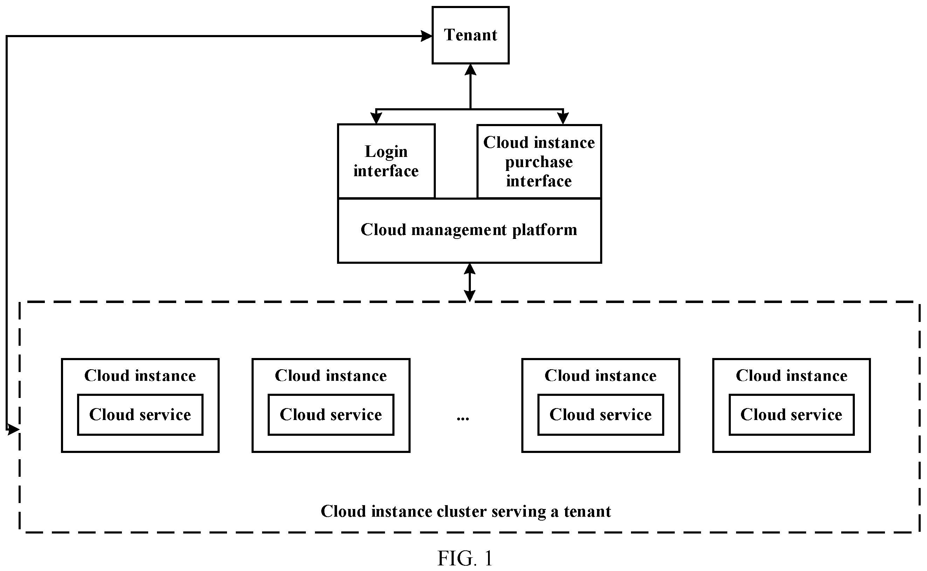

To resolve the foregoing problem, an embodiment of this application provides an access control method based on a cloud management platform. The method may be implemented by using a cloud service system (for example, a public cloud system). FIG. 1 is a diagram of a structure of a cloud service system according to an embodiment of this application. As shown in FIG. 1, the cloud service system includes infrastructure that can provide a cloud service and a cloud management platform that manages the infrastructure. The following separately describes the cloud management platform and the infrastructure.

The cloud management platform can centrally manage the infrastructure in the entire cloud service system (for example, in the infrastructure, a plurality of cloud instances serving the tenant are created for the tenant according to an instruction of the tenant, and these cloud instances may be used to run a cloud service (for example, a data storage service or a data encryption/decryption service) specified by the tenant, to provide remote data processing for the tenant, and the like). The cloud management platform may also be open to tenants outside the cloud service system and respond to their requests. For example, the cloud management platform may provide various interfaces such as a login interface and a cloud instance purchase interface for access by a client of a tenant (for example, a terminal device used by the tenant or a browser on the terminal device). The cloud management platform may perform identity authentication on the client of the tenant through the login interface. After the identity authentication succeeds, the client of the tenant can be allowed to log in to the cloud management platform. For another example, the cloud management platform may further allow, through the cloud instance purchase interface, the client of the tenant to send a purchase request of the tenant for a plurality of cloud instances to the cloud management platform. The purchase request is usually used to indicate the plurality of cloud instances and a cloud service that needs to be deployed for each cloud instance. Therefore, the cloud management platform may create a plurality of dedicated cloud instances for the tenant based on the purchase request, and deploy a corresponding cloud service on each cloud instance, so that the plurality of cloud instances meet the data processing requirement of the tenant.

The infrastructure includes the plurality of cloud instances that serve the tenant, and each cloud instance runs one cloud service. Because the data processing requirement of the tenant may need to be assisted by different cloud services to complete, communication occurs between different cloud services, which is equivalent to communication between different cloud instances. Details are not described again subsequently. It should be noted that the plurality of cloud instances serving the tenant implement communication based on a (identity) credential of the tenant, and the credential of the tenant is usually preset in the cloud management platform. When the tenant has the data processing requirement, the tenant may send a data processing request to a cloud instance. The data processing request not only includes to-be-processed data, but also includes an access control policy customized by the tenant for the plurality of cloud instances. The access control policy may be used to indicate a part of cloud instances selected by the tenant from the plurality of cloud instances, and the part of cloud instances may be granted the credential of the tenant by the cloud management platform. In this case, after obtaining the data processing request, the cloud instance may parse the data processing request, generate a credential acquisition request that carries the access control policy, and then send the credential acquisition request to the cloud management platform. Then, the cloud management platform may parse the credential acquisition request, to obtain the access control policy. Then, the cloud management platform may determine whether the cloud instance is in the part of cloud instances indicated by the access control policy. If the cloud instance is in the part of cloud instances indicated by the access control policy, the cloud management platform may provide the credential of the tenant for the cloud instance, so that the cloud instance accesses remaining cloud instances based on the credential of the tenant, thereby meeting the data processing requirement of the tenant.

Further, the credential of the tenant may be understood as an account password pair generated by the cloud management platform based on identity information of the tenant. It may be understood that, for any cloud instance, the cloud management platform may generate, for the cloud instance, the account password pair dedicated to the cloud instance, so that the cloud instance accesses another cloud instance in the identity of the tenant.

Further, the access control policy formulated by the tenant may be presented as a special data structure (payload), and may include a plurality of fields. A part of fields may be used to describe an access control condition, and another part of fields may be used to describe access control information. The access control condition and the access control information may be combined and used by the cloud management platform to perform authorization detection on any cloud instance (that is, whether the cloud instance can be granted the credential of the tenant), or may be separately used by the cloud management platform to perform authorization detection on any cloud instance. Details are not described herein.

Further, in the access control policy formulated by the tenant, another part of fields is a signature of the entire access control policy, and the signature is obtained by the tenant performing a signing operation on the foregoing two parts of fields. In this case, after obtaining the access control policy, the cloud management platform may first perform a signature verification operation on the signature. If the signature verification succeeds, it indicates that both the two parts of fields are trusted (or in other words, the two parts of fields are complete, or the like). Therefore, the cloud management platform may perform authorization detection on the cloud instance by using the two parts of fields.

Further, in the plurality of cloud instances serving the tenant, a cloud service run by any cloud instance may be an application, a microservice, a plug-in, or the like developed by the tenant, or may be an application, a microservice, a plug-in, or the like provided by a cloud vendor (a developer of the cloud service system) to the tenant. This is not limited herein.

Further, in the plurality of cloud instances serving the tenant, these cloud instances may be presented in a plurality of manners. For example, these cloud instances may be physical servers selected by the cloud management platform. For another example, these cloud instances may be bare metal servers selected by the cloud management platform. For another example, these cloud instances may be virtual machines (virtual machine, VM) created by the cloud management platform on a physical server by using a virtualization technology. For another example, these cloud instances may be containers (docker) created by the cloud management platform on a physical server by using the virtualization technology. For another example, these cloud instances may be micro virtual machines (microVM) created by the cloud management platform on a physical server by using the virtualization technology.

Further, for the plurality of cloud instances serving the tenant, the plurality of cloud instances may be deployed at a same site or different sites. The site may be presented in a plurality of forms. For example, the site may be a region (region) in the infrastructure. For another example, the site may be an availability zone (availability zone) in the infrastructure. For another example, the site may be a data center (data center, DC) in the infrastructure. For another example, the site may be an equipment room (room) in the infrastructure. For another example, the site may be a cabinet in the infrastructure.

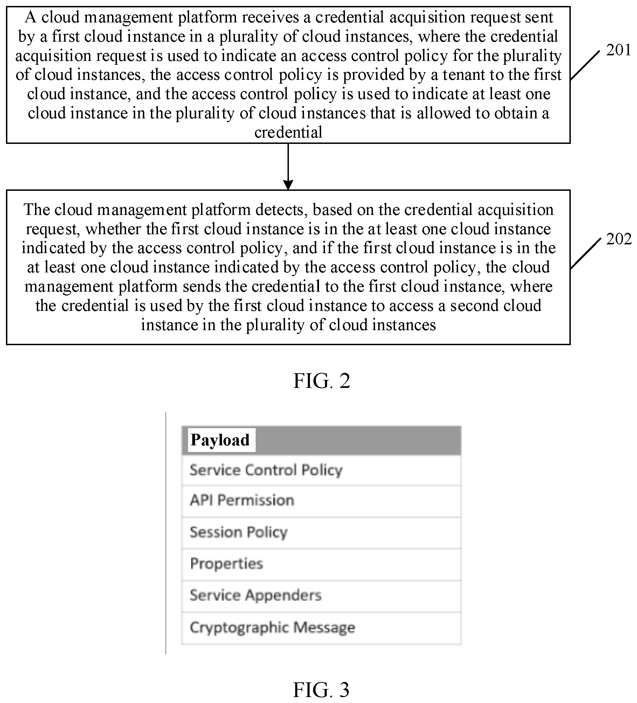

It can be learned from the foregoing cloud service system that, after a cloud instance serving a tenant receives the data processing request from the tenant, the cloud instance may generate, based on an access control policy included in the data processing request, a credential acquisition request including the access control policy, and send the credential acquisition request to the cloud management platform. Then, the cloud management platform may parse the credential acquisition request to obtain the access control policy. Because the access control policy may be used to indicate a part of cloud instances that are in the plurality of cloud instances and that are selected by the tenant and to which the credential of the tenant can be granted, the cloud management platform may determine whether the cloud instance is in the part of cloud instances indicated by the access control policy. If the cloud instance is in the part of cloud instances indicated by the access control policy, the cloud management platform may provide the credential of the tenant for the cloud instance, so that the cloud instance accesses the remaining cloud instances based on the credential of the tenant, thereby meeting the data processing requirement of the tenant. It can be learned that, in the plurality of cloud instances serving the tenant, a specific part of cloud instances to which the credential of the tenant can be granted is specified by the tenant. The part of cloud instances that are granted the credential may obtain the credential of the tenant from the cloud management platform, to access the remaining cloud instances. In other words, access relationships between the plurality of cloud instances are customized by the tenant. Therefore, for any one of the plurality of cloud instances, whether the cloud instance can access the remaining cloud instances is completely set according to an access control intention of the tenant. The tenant can implement active control on the cloud instance. This helps the tenant manage mutual access between the plurality of cloud instances, thereby improving user experience of the tenant. To further understand the process, the following further describes the process with reference to FIG. 2. FIG. 2 is a schematic flowchart of an access control method based on a cloud management platform according to an embodiment of this application. As shown in FIG. 2, the method may be implemented by using the cloud service system shown in FIG. 1. The cloud management platform includes an infrastructure that provides a cloud service to a tenant and a cloud management platform that manages the infrastructure. The infrastructure includes a plurality of cloud instances that serve the tenant, and the plurality of cloud instances implement communication based on a credential of the tenant. The method includes the following steps.

201: A cloud management platform receives a credential acquisition request sent by a first cloud instance in the plurality of cloud instances, where the credential acquisition request is used to indicate an access control policy for the plurality of cloud instances, the access control policy is provided by the tenant to the first cloud instance, and the access control policy is used to indicate at least one cloud instance in the plurality of cloud instances that is allowed to obtain a credential.

In this embodiment, in the plurality of cloud instances serving the tenant, when the tenant has a data processing requirement, the tenant may send a data processing request to a first cloud instance in the plurality of cloud instances, where the data processing request carries to-be-processed data of the tenant and the access control policy customized by the tenant for the plurality of cloud instances. Then, the first cloud instance may parse the data processing request, may determine that the tenant has the data processing requirement, and obtain the access control policy from the data processing request. Because the data processing requirement of the tenant needs to be implemented by the first cloud instance in combination with the second cloud instance, the first cloud instance may generate the credential acquisition request carrying the access control policy, and send the credential acquisition request to the cloud management platform.

It should be noted that the access control policy is used to indicate at least one cloud instance selected by the tenant from the plurality of cloud instances and allowed to obtain the credential of the tenant.

Specifically, the access control policy is usually a special data structure (payload), and the data structure may include at least one of the following fields. The following separately describes these fields.
(1) A cloud instance (or cloud service) control policy (service control policy) field, where the field describes a cloud instance trustlist set by the tenant, and the cloud instance trustlist includes at least one cloud instance selected by the tenant from the plurality of cloud instances, indicating that the at least one cloud instance may be directly granted the credential of the tenant. In other words, the at least one cloud instance is a cloud instance directly authorized by the tenant.
   For example, as shown in FIG. 3 (FIG. 3 is a diagram of a payload according to an embodiment of this application), it is assumed that cloud instances serving a tenant include a cloud instance 1, a cloud instance 2, and a cloud instance 3. A cloud service 1 runs on the cloud instance 1, a cloud service 2 runs on the cloud instance 2, and a cloud service 3 runs on the cloud instance 3. For the three cloud instances, the tenant may define a payload, where the payload includes a service control policy field, and the field is used to describe a cloud instance trustlist, where the cloud instance trustlist includes the cloud instance 1 and the cloud instance 3, indicating that the two cloud instances are cloud instances directly authorized by the tenant.
(2) An API permission (API permission) field, where the field describes an interface trustlist set by the tenant. It should be noted that, in the plurality of cloud instances serving the tenant, each cloud instance provides at least one interface (which may also be understood as that each cloud instance provides at least one type of interface externally). The interface trustlist includes an interface of at least one cloud instance selected by the tenant from interfaces of the plurality of cloud instances, indicating that once the interface of the at least one cloud instance is invoked, the at least one cloud instance may be directly granted the credential of the tenant.
   For example, as shown in FIG. 3, it is assumed that cloud instances serving the tenant include a cloud instance 1, a cloud instance 2, and a cloud instance 3. The three cloud instances may externally provide one or more interfaces of different types, such as an upload interface, a download interface, an encryption interface, and a decryption interface. The tenant may define a payload, where the payload includes an API permission field. The field is used to describe an interface trustlist. The interface trustlist may include an upload interface and a download interface of the cloud instance 1, and an encryption interface and a decryption interface of the cloud instance 2.
(3) A session policy (session policy) field, where the field describes a permission control policy of a larger scope set by the tenant. The permission control policy may be a communication duration of an entire communication link set by the tenant, or may be a feasible communication path between the tenant and each cloud instance set by the tenant, or the like. The communication duration of the entire communication link refers to total duration from time when the tenant accesses the first cloud instance to time when the first cloud instance accesses the second cloud instance until the last cloud instance is accessed. The total duration cannot exceed the communication duration. A feasible communication path between the tenant and a cloud instance refers to cloud instances that can be used between the tenant and the cloud instance when the tenant communicates with the cloud instance. It can be learned that both the communication duration and the feasible communication path may be used to determine whether a credential of the tenant can be granted to a cloud instance.
   For example, as shown in FIG. 3, it is assumed that cloud instances serving the tenant include the cloud instance 1, the cloud instance 2, and the cloud instance 3. For the three cloud instances, the tenant may define a payload, where the payload includes a session policy field. The field is used to specify that the communication duration of the communication link set by the tenant is 3 minutes, or the field is used to describe a feasible communication path between the tenant and the cloud instance 1. The feasible communication path is that the tenant can directly access the cloud instance 1, but the tenant cannot access the cloud instance 1 through another cloud instance (for example, the cloud instance 2 and/or the cloud instance 3).
(4) A properties (properties) field, where the field may be used to describe information such as an identity used by the tenant to access a cloud instance or a moment at which the tenant accesses the cloud instance (that is, an initial moment at which the tenant sends the data processing request to the cloud instance). For the identity used by the tenant to access a cloud instance, if the identity used by the tenant to access the cloud instance is in the preset identity trustlist, the cloud instance may be granted the credential of the tenant For a moment at which a tenant accesses a cloud instance, if a difference between the moment and a current moment is less than the foregoing communication duration, the cloud instance may be granted the credential of the tenant.
   For example, as shown in FIG. 3, it is assumed that cloud instances serving a tenant include the cloud instance 1, the cloud instance 2, and the cloud instance 3. It is assumed that the tenant directly accesses the cloud instance 1. For the cloud instance 1, the tenant may define a payload, where the payload includes a properties field. The field is used to specify that an identity used when the tenant accesses the cloud instance 1 is X, or the field is used to specify that a moment at which the tenant directly accesses the cloud instance 1 is 10:00.
(5) A cloud instance (or cloud service) record (service appenders) field, where the field is used to record an intermediate node and a termination node that are passed through by the current communication link. The communication link usually uses the tenant as an initial node. Once the tenant accesses a cloud instance, the cloud instance is recorded as the intermediate node by the field. It can be learned that the field may describe the current communication path between the tenant and the cloud instance accessed by the tenant (for example, the initial node of the current communication path is the tenant, the first intermediate node is the cloud instance directly accessed by the tenant, and the second intermediate node is the cloud instance directly accessed by the first intermediate node). It should be noted that, because the content of the field is updated, the entire data structure is also updated, that is, the entire access control policy is also updated.
   For example, as shown in FIG. 3, it is assumed that cloud instances serving a tenant include the cloud instance 1, the cloud instance 2, and the cloud instance 3. It is assumed that the tenant directly accesses the cloud instance 1. For the cloud instance 1, the tenant may define a payload, where the payload includes a service appenders field. Because the tenant needs to access the cloud instance 1, the field may record an initial node-tenant. Certainly, the field may not record the initial node, and is blank content. By default, the initial node is the tenant. In other words, the current communication path between the tenant and the cloud instance 1 described in the field may be understood as that the tenant directly accesses the cloud instance 1.
(6) An encrypted information (cryptographic message) field, where the field is used to describe a signature of the entire data structure, the signature is obtained by the tenant performing a signing operation on remaining fields (for example, one or more of the foregoing five fields (1) to (5)) of the data structure, and the signature may be used to ensure that the remaining fields are trusted, that is, ensure that these fields are not tampered with.

202: The cloud management platform detects, based on the credential acquisition request, whether the first cloud instance is in the at least one cloud instance indicated by the access control policy, and if the first cloud instance is in the at least one cloud instance indicated by the access control policy, the cloud management platform sends the credential to the first cloud instance, where the credential is used by the first cloud instance to access a second cloud instance in the plurality of cloud instances.

After obtaining the credential acquisition request sent by the first cloud instance, the cloud management platform may parse the credential acquisition request to obtain the access control policy formulated by the tenant for the plurality of cloud instances. Therefore, the cloud management platform may determine, based on the access control policy, at least one cloud instance in the plurality of cloud instances to which the credential of the tenant can be granted. Therefore, the cloud management platform may detect whether the first cloud instance is in the at least one cloud instance. If the first cloud instance is in the at least one cloud instance, the cloud management platform provides the credential of the tenant for the first cloud instance. Then, the first cloud instance processes the to-be-processed data of the tenant to obtain processed data (the processing performed by the first cloud instance on the to-be-processed data is irrelevant to the credential of the tenant, and even if the first cloud instance does not obtain the credential of the tenant, the first cloud instance may still process the to-be-processed data). Because the processed data further needs to be processed by the second cloud instance, a new data processing request may be generated. The new data processing request includes the processed data, the credential of the tenant, and the access control policy formulated by the tenant for the plurality of cloud instances, and the new data processing request is sent to the second cloud instance. Because the new data processing request carries the credential of the tenant, the second cloud instance parses the new data processing request to obtain the access control policy and the processed data. In this case, the second cloud instance may determine whether the third cloud instance is required to assist in completing the data processing requirement of the tenant. If the third cloud instance is not required, the second cloud instance may directly process the processed data to obtain a data processing result, and return the data processing result to the tenant by using the first cloud instance. If the third cloud instance is required, the second cloud instance may perform the operation performed by the first cloud instance. Details are not described herein again.

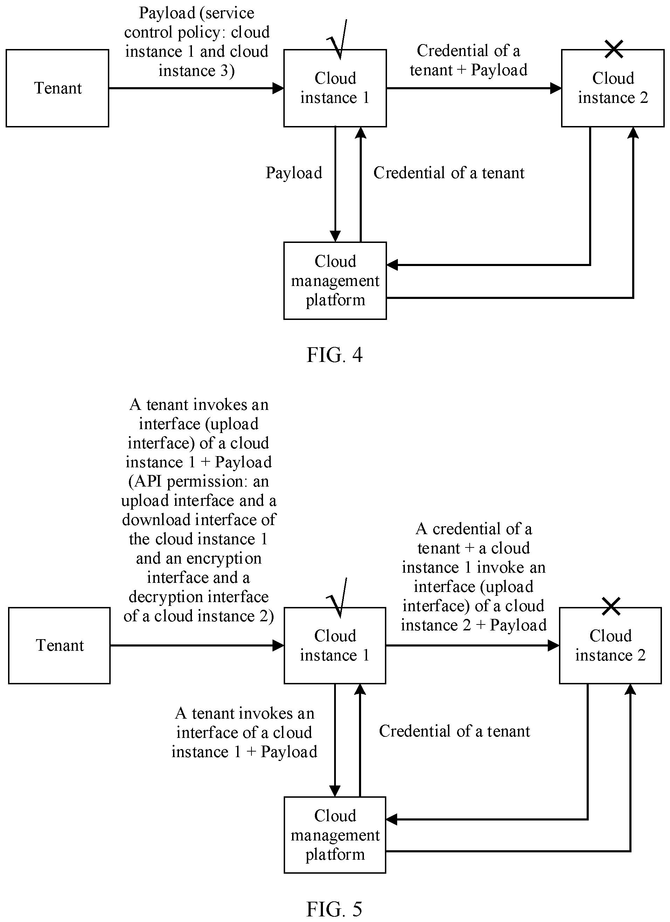

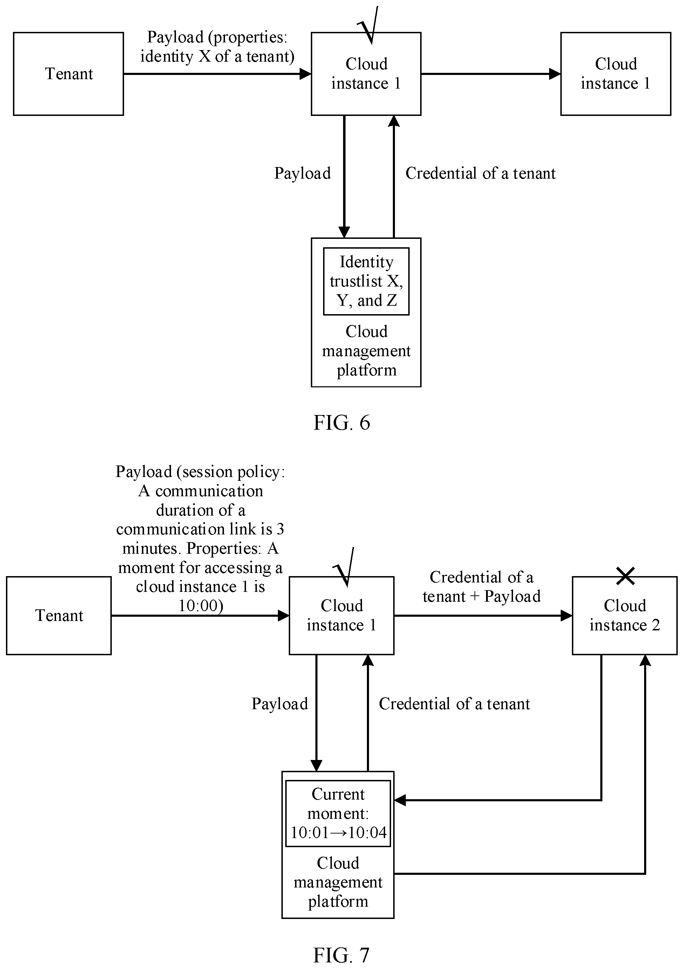

Specifically, the cloud management platform may detect, in the following multiple manners, whether the first cloud instance is in the at least one cloud instance indicated by the access control policy.
(1) After receiving the credential acquisition request sent by the first cloud instance, the cloud management platform may parse the request to obtain the access control policy that is formulated by the tenant for the plurality of cloud instances. When the access control policy includes the cloud instance control policy field, because the field is used to describe the cloud instance trustlist set by the tenant, and the cloud instance trustlist includes at least one cloud instance selected by the tenant from the plurality of cloud instances, the cloud management platform detects whether the first cloud instance is in the cloud instance trustlist. If the first cloud instance is in the cloud instance trustlist, the cloud management platform may provide the credential of the tenant for the first cloud instance. Therefore, the first cloud instance may access the second cloud instance by using the credential of the tenant. If the first cloud instance is not in the cloud instance trustlist, the cloud management platform refuses to provide the credential of the tenant for the first cloud instance. Therefore, the first cloud instance cannot access the second cloud instance.
   Still as shown in the foregoing example, FIG. 4 is a diagram of another structure of a cloud service system according to an embodiment of this application. As shown in FIG. 4, after a tenant initiates a data processing request carrying a payload to a cloud instance 1, the cloud instance 1 may parse the data processing request to obtain the payload, and send a credential acquisition request carrying the payload to the cloud management platform. After parsing the credential acquisition request, the cloud management platform may obtain the payload. Because the payload includes a service control policy field, and a cloud instance trustlist described by the field includes the cloud instance 1 (cloud service 1) and a cloud instance 3 (cloud service 3), the cloud management platform may determine that the cloud instance 1 is in the cloud instance trustlist. In this case, the cloud management platform may provide the credential of the tenant for the cloud instance 1, so that the cloud instance 1 accesses a cloud instance 2. In addition, if the cloud instance 2 also needs to obtain the credential of the tenant, the cloud instance 2 also sends a credential acquisition request to the cloud management platform. However, because the cloud instance 2 is not in the cloud instance trustlist, the cloud management platform does not provide the credential of the tenant for the cloud instance 2. Therefore, the cloud instance 2 cannot access remaining cloud instances.
(2) After receiving the credential acquisition request sent by the first cloud instance, the cloud management platform may parse the request to obtain the interface of the first cloud instance invoked by the tenant and the access control policy formulated by the tenant for the plurality of cloud instances. When the access control policy includes the interface permission field, because the field describes the interface trustlist set by the tenant, and the interface trustlist includes an interface of at least one cloud instance selected by the tenant from interfaces of the plurality of cloud instances, the cloud management platform may detect whether the interface of the first cloud instance invoked by the tenant is in the interface trustlist. If the interface of the first cloud instance invoked by the tenant is in the interface trustlist, the cloud management platform may provide the credential of the tenant for the first cloud instance. Therefore, the first cloud instance may access the second cloud instance by using the credential of the tenant. If the interface of the first cloud instance invoked by the tenant is not in the interface trustlist, the cloud management platform refuses to provide the credential of the tenant for the first cloud instance. Therefore, the first cloud instance cannot access the second cloud instance.
   Still as shown in the foregoing example, FIG. 5 is a diagram of still another structure of a cloud service system according to an embodiment of this application. After receiving a credential acquisition request sent by a cloud instance 1, a cloud management platform may parse the credential acquisition request, to obtain a payload and determine that a tenant invokes an upload interface of the cloud instance 1 (the upload interface of the cloud instance 1 may be presented in the request by using an identifier of the upload interface of the cloud instance 1, and therefore, it may be determined, based on the identifier, that the tenant invokes the upload interface of the cloud instance 1). Because the payload includes an API permission field, the field is used to describe an interface trustlist, and the interface trustlist may include an upload interface and a download interface of the cloud instance 1, and an encryption interface and a decryption interface of a cloud instance 2. Because the tenant invokes the upload interface of the cloud instance 1, and the upload interface of the cloud instance 1 is in the interface trustlist, the cloud management platform may provide the credential of the tenant for the cloud instance 1, so that the cloud instance 1 accesses the cloud instance 2. In addition, if the cloud instance 1 subsequently invokes an upload interface of the cloud instance 2, and the cloud instance 2 also needs to obtain the credential of the tenant, the cloud instance 2 also sends a credential acquisition request to the cloud management platform. However, because the upload interface of the cloud instance 2 is not in the interface trustlist, the cloud management platform does not provide the credential of the tenant for the cloud instance 2. Therefore, the cloud instance 2 cannot access another cloud instance.
(3) After receiving the credential acquisition request sent by the first cloud instance, the cloud management platform may parse the request to obtain the access control policy that is formulated by the tenant for the plurality of cloud instances. When the access control policy includes the feature field, because the field may describe the identity used by the tenant to access the first cloud instance, and the identity trustlist for the first cloud instance is preset in the cloud management platform, the cloud management platform may detect whether the identity used by the tenant to access the first cloud instance is in the identity trustlist for the first cloud instance. If the identity used by the tenant to access the first cloud instance is in the identity trustlist for the first cloud instance, the cloud management platform may provide the credential of the tenant for the first cloud instance. Therefore, the first cloud instance may access the second cloud instance by using the credential of the tenant. If the identity used by the tenant to access the first cloud instance is not in the identity trustlist for the first cloud instance, the cloud management platform refuses to provide the credential of the tenant for the first cloud instance. Therefore, the first cloud instance cannot access the second cloud instance.
   Still as shown in the foregoing example, as shown in FIG. 6 (FIG. 6 is a diagram of yet another structure of a cloud service system according to an embodiment of this application), after receiving a credential acquisition request sent by a cloud instance 1, a cloud management platform may parse the credential acquisition request to obtain a payload. Because the payload includes a properties field, and the field is used to specify that the identity used by the tenant to access the cloud instance 1 is X, the cloud management platform may obtain an identity trustlist for the cloud instance 1. The identity trustlist includes identities such as X, Y, and Z, and it is determined that the identity used by the tenant to access the cloud instance 1 is in the identity trustlist. The cloud management platform may provide the credential of the tenant for the cloud instance 1, so that the cloud instance 1 accesses the cloud instance 2.
(4) After receiving the credential acquisition request sent by the first cloud instance, the cloud management platform may parse the request to obtain the access control policy that is formulated by the tenant for the plurality of cloud instances. When the access control policy includes a session policy field and a feature field, because the session policy field may describe the communication duration of an entire communication link set by the tenant, and the feature field may describe a moment at which the tenant accesses the first cloud instance, the cloud management platform may calculate a difference between the moment at which the tenant accesses the first cloud instance and a current moment, and detect whether the difference is less than the communication duration of the entire communication link set by the tenant. If the difference is less than the communication duration, the cloud management platform may provide the credential of the tenant for the first cloud instance, so that the first cloud instance may access the second cloud instance by using the credential of the tenant. If the difference is greater than or equal to the communication duration, the cloud management platform refuses to provide the credential of the tenant for the first cloud instance. Therefore, the first cloud instance cannot access the second cloud instance.
   Still as shown in the foregoing example, as shown in FIG. 7 (FIG. 7 is a diagram of still yet another structure of a cloud service system according to an embodiment of this application), after receiving a credential acquisition request sent by a cloud instance 1, the cloud management platform may parse the credential acquisition request to obtain a payload. Because the payload includes a session policy field and a properties field, the session policy field is used to specify that the communication duration of a communication link set by the tenant is 3 minutes, and the properties field is used to specify that a moment at which the tenant directly accesses a cloud instance 1 is 10:00. Because the current moment is 10:01, the cloud management platform may calculate that a difference between the moment at which the tenant directly accesses the cloud instance 1 and the current moment is 1 minute, which is less than the communication duration of the communication link set by the tenant. Therefore, the cloud management platform may provide the credential of the tenant for the cloud instance 1, so that the cloud instance 1 accesses a cloud instance 2. In addition, if the cloud instance 2 also needs to obtain the credential of the tenant subsequently, the cloud instance 2 also sends a credential acquisition request to the cloud management platform. In this case, the current moment has been updated to 10:04, and a difference between the two moments is 4 minutes. The difference is greater than the communication duration of the communication link set by the tenant. Therefore, the cloud management platform does not provide the credential of the tenant for the cloud instance 2, and the cloud instance 2 cannot access other cloud instances.
(5) After receiving the credential acquisition request sent by the first cloud instance, the cloud management platform may parse the request to obtain the access control policy that is formulated by the tenant for the plurality of cloud instances. When the access control policy includes a session policy field and a cloud instance record field, because the cloud instance record field may describe a current communication path between a tenant and a first cloud instance, and the session policy field may describe a feasible communication path between the tenant and the first cloud instance, the cloud management platform may detect whether the current communication path between the tenant and the first cloud instance matches a feasible communication path between the tenant and the first cloud instance (for example, whether the two communication paths are the same or similar). If the two communication paths match, the cloud management platform may provide the credential of the tenant for the first cloud instance, so that the first cloud instance may access the second cloud instance by using the credential of the tenant. If the two communication paths do not match, the cloud management platform refuses to provide the credential of the tenant for the first cloud instance, and therefore the first cloud instance cannot access the second cloud instance.

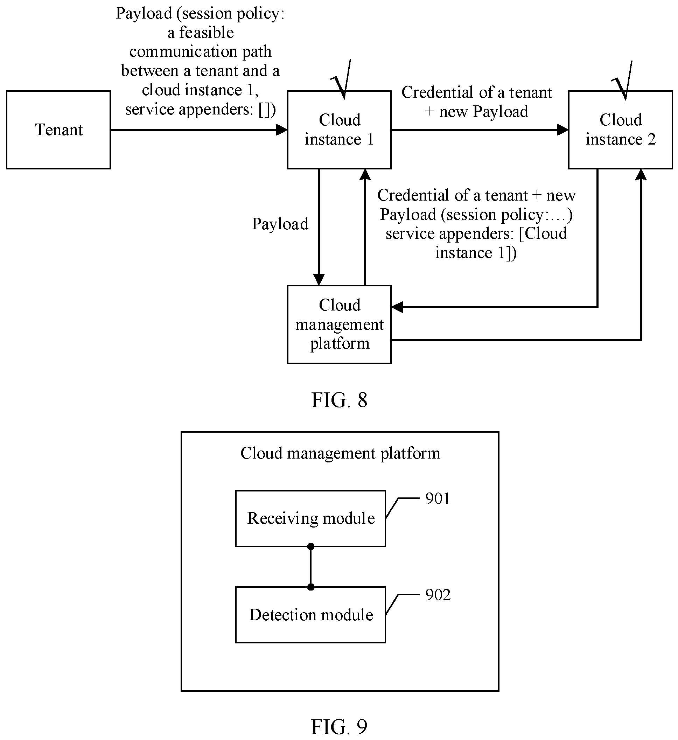

Still as shown in the foregoing example, as shown in FIG. 8 (FIG. 8 is a diagram of further another structure of a cloud service system according to an embodiment of this application), after receiving a credential acquisition request sent by a cloud instance 1, the cloud management platform may parse the credential acquisition request to obtain a payload. Because the payload includes a session policy field and a service appenders field, the session policy field is used to specify that a feasible communication path between a tenant and the cloud instance 1 (cloud service 1) is that the tenant can directly access the cloud instance 1, and a service appenders field (as shown in FIG. 8, the field is empty and does not record a start node) is used to specify that a current communication path between the tenant and the cloud instance 1 is that the tenant directly accesses the cloud instance 1. The two communication paths are matched. Therefore, the cloud management platform may provide the credential of the tenant for the cloud instance 1, so that the cloud instance 1 accesses a cloud instance 2.

It should be noted that the cloud management platform may further update content of the service appenders field to the cloud instance 1. Therefore, the updated service appenders field records the intermediate node cloud instance 1. In this case, the payload is also updated to a new payload, and the cloud management platform may provide the new payload and the credential of the tenant to the cloud instance 1, so that the cloud instance 1 may access the cloud instance 2 by using the new payload and the credential of the tenant. In this case, the updated service appenders field in the new payload is used to specify that a current communication path between the tenant and the cloud instance 2 is that the tenant indirectly accesses the cloud instance 2 by using the cloud instance 1. Similarly, if the cloud instance 2 applies to the cloud management platform for the credential of the tenant, because the session policy field further describes that the feasible communication path between the tenant and the cloud instance 2 is that the cloud instance 2 (cloud service 2) can be accessed only after passing through the cloud instance 1 (cloud service 1), the cloud management platform may provide the credential of the tenant for the cloud instance 2.

More specifically, to ensure that the access control policy is reliable, the following operations may be further performed.

After receiving the credential acquisition request sent by the first cloud instance, the cloud management platform may parse the request to obtain the access control policy that is formulated by the tenant for the plurality of cloud instances. When the access control policy includes an encrypted information field, the encrypted information field is usually a signature of the access control policy, and the signature is obtained by the tenant by performing signing operation on the remaining fields included in the access control policy. In this case, the cloud management platform may first perform a signature verification operation on the signature. If the signature verification operation succeeds, the cloud management platform detects, by using remaining fields (referring to the foregoing (1) to (5), and details are not described herein again), whether the first cloud instance can be authorized, that is, whether the credential of the tenant can be provided for the first cloud instance.

It should be understood that, in this embodiment, in the access control policy, only the cloud instance record field can be modified by the cloud management platform, and remaining fields are usually not modifiable by the cloud management platform.

It should be further understood that, in this embodiment, only the foregoing five independent detection manners (1) to (5) are described as an example. In actual application, the five manners may be used in combination. For example, in a case of (1)+(2), the cloud management platform provides the credential of the tenant to the first cloud instance only when determining that the first cloud instance is in the cloud instance trustlist and the interface invoked by the tenant to invoke the first cloud instance is in the interface trustlist. Details are not described herein.

In this embodiment of this application, among a plurality of cloud instances serving a tenant, when a first cloud instance needs to access a second cloud instance, the first cloud instance sends a credential acquisition request to a cloud management platform, where the credential acquisition request carries an access control policy for the plurality of cloud instances, the access control policy is provided by the tenant for the first cloud instance, and the access control policy is used to indicate at least one cloud instance in the plurality of cloud instances that is allowed to obtain a credential. Then, the cloud management platform may parse the credential acquisition request to obtain the access control policy. Therefore, the cloud management platform may detect whether the first cloud instance is in the at least one cloud instance indicated by the access control policy. If the first cloud instance is in the at least one cloud instance indicated by the access control policy, the cloud management platform sends the credential of the tenant to the first cloud instance, so that the first cloud instance accesses the second cloud instance based on the credential of the tenant. In the foregoing process, in the plurality of cloud instances serving the tenant, the at least one cloud instance to which the credential of the tenant can be granted is specified by the tenant, and the at least one cloud instance that has been granted may obtain the credential of the tenant from the cloud management platform, to access remaining cloud instances. In other words, access relationships between the plurality of cloud instances are customized by the tenant. Therefore, whether the first cloud instance in the plurality of cloud instances can access the second cloud instance is set by the tenant in advance, and is completely set based on an access control intention of the tenant. In this way, the tenant can actively control the first cloud instance, which helps the tenant manage mutual access between the plurality of cloud instances, thereby improving experience of the tenant, and further ensuring data security of the tenant on the cloud instance.

The foregoing describes in detail the access control method based on the cloud management platform provided in embodiments of this application. The following describes a cloud management platform provided in embodiments of this application. FIG. 9 is a diagram of a structure of a cloud management platform according to an embodiment of this application. As shown in FIG. 9, the cloud management platform is configured to manage a plurality of cloud instances that provide a cloud service to a tenant. The plurality of cloud instances can communicate with each other based on a credential of the tenant. The cloud management platform includes:
a receiving module 901, configured to receive a credential acquisition request sent by a first cloud instance in the plurality of cloud instances, where the credential acquisition request is used to indicate an access control policy for the plurality of cloud instances, the access control policy is provided by the tenant to the first cloud instance, and the access control policy is used to indicate at least one cloud instance in the plurality of cloud instances that is allowed to obtain the credential; and for example, the receiving module 901 may be configured to implement step 201 in the embodiment shown in FIG. 2.
a detection module 902, configured to detect, based on the credential acquisition request, whether the first cloud instance is in the at least one cloud instance indicated by the access control policy, and if the first cloud instance is in the at least one cloud instance indicated by the access control policy, the cloud management platform is configured to send the credential to the first cloud instance, where the credential is used by the first cloud instance to access a second cloud instance in the plurality of cloud instances. For example, the detection module 902 may be configured to implement step 202 in the embodiment shown in FIG. 2.

In a possible implementation, the access control policy is used to indicate a cloud instance trustlist set by the tenant, the cloud instance trustlist includes at least one of the plurality of cloud instances, and the detection module 902 is configured to detect, based on the credential acquisition request, whether the first cloud instance is in the cloud instance trustlist indicated by the access control policy.

In a possible implementation, each cloud instance includes at least one interface, the credential acquisition request is further used to indicate an interface of the first cloud instance invoked by the tenant, the access control policy is used to indicate an interface trustlist set by the tenant, the interface trustlist includes an interface of at least one cloud instance in the plurality of cloud instances, and the detection module 902 is configured to detect, based on the credential acquisition request, whether the interface of the first cloud instance invoked by the tenant is in the interface trustlist indicated by the access control policy.

In a possible implementation, the access control policy is used to indicate an identity of the tenant, an identity trustlist for the first cloud instance is preset in the cloud management platform, the identity trustlist includes a plurality of preset identities, and the detection module 902 is configured to detect, based on the credential acquisition request, whether the identity indicated by the access control policy is in the identity trustlist.

In a possible implementation, the access control policy is used to indicate a communication duration set by the tenant and a moment at which the tenant accesses the first cloud instance. The detection module 902 is configured to detect, based on the credential acquisition request, whether a difference between the moment indicated by the access control policy and a current moment is less than the communication duration indicated by the access control policy.

In a possible implementation, the access control policy is used to indicate a feasible communication path set by the tenant between the tenant and the first cloud instance. The detection module 902 is configured to detect, based on the credential acquisition request, whether a current communication path between the tenant and the first cloud instance matches the feasible communication path indicated by the access control policy.

In a possible implementation, the access control policy is further used to indicate a signature of the access control policy, the signature is obtained by the tenant performing a signing operation on the access control policy, and the detection module 902 is configured to: perform, based on the credential acquisition request, a signature verification operation on the signature indicated by the access control policy; and if the signature verification operation succeeds, detect whether the first cloud instance is in the at least one cloud instance indicated by the access control policy.

In a possible implementation, the plurality of cloud instances are any one of the following: a physical server, a virtual machine, a container, a micro virtual machine, and a bare metal server.

It should be noted that, because content such as information exchange and an implementation process between the modules/units of the apparatus is based on a same concept as the method embodiments of this application, technical effects brought by the content are the same as those brought by the method embodiments of this application. For specific content, refer to the descriptions in the foregoing method embodiments of this application. Details are not described herein again.

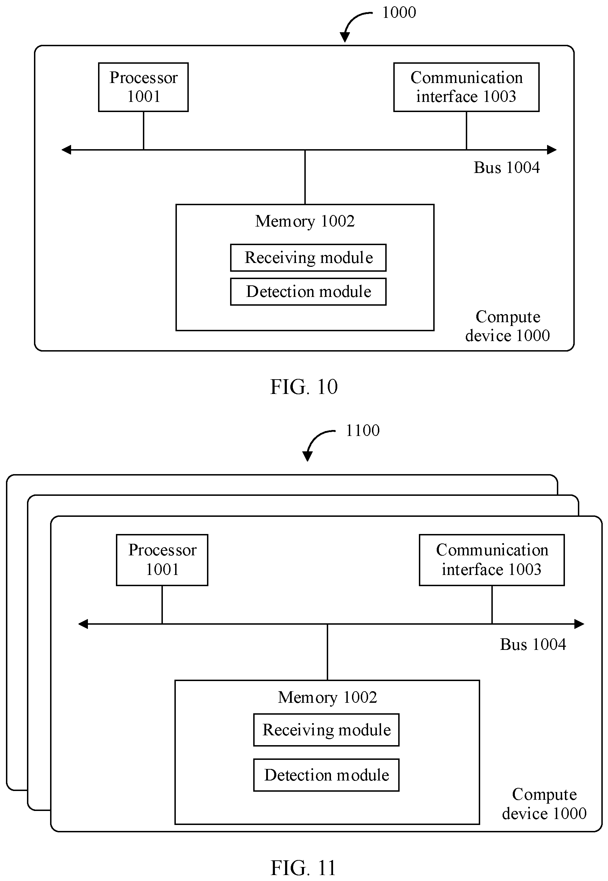

FIG. 10 is a diagram of a structure of a compute device according to an embodiment of this application. As shown in FIG. 10, the compute device 1000 (which may be configured to present the foregoing cloud management platform) includes a processor 1001, a memory 1002, a communication interface 1003, and a bus 1004. The processor 1001, the memory 1002, and the communication interface 1003 are coupled through a bus (not marked in the figure). The memory 1002 stores instructions. When the instructions in the memory 1002 are executed, the compute device 1000 performs the method performed by the cloud management platform in the foregoing method embodiment.

The compute device 1000 may be one or more integrated circuits configured to implement the foregoing method, for example, one or more application-specific integrated circuits (application-specific integrated circuits, ASICs), one or more microprocessors (digital signal processors, DSPs), one or more field programmable gate arrays (field programmable gate arrays, FPGAs), or a combination of at least two of these integrated circuit forms. For another example, when the unit in the apparatus is implemented in a form of scheduling a program by the processing element, the processing element may be a general-purpose processor, for example, a central processing unit (central processing unit, CPU) or another processor that may invoke the program. For still another example, the units may be integrated and implemented in a form of a system-on-a-chip (system-on-a-chip, SOC).

The processor 1001 may be a central processing unit (central processing unit, CPU), or may be another general-purpose processor, a digital signal processor (digital signal processor, DSP), an application-specific integrated circuit (application-specific integrated circuit, ASIC), a field programmable gate array (field programmable gate array, FPGA) or another programmable logic device, a transistor logic device, a hardware component, or any combination thereof. The general purpose processor may be a microprocessor or any regular processor or the like.

The memory 1002 may be a volatile storage or a nonvolatile storage, or may include both a volatile storage and a nonvolatile storage. The nonvolatile memory may be a read-only memory (read-only memory, ROM), a programmable read-only memory (programmable ROM, PROM), an erasable programmable read-only memory (erasable PROM, EPROM), an electrically erasable programmable read-only memory (electrically EPROM, EEPROM), or a flash memory. The volatile memory may be a random access memory (random access memory, RAM), used as an external cache. By way of example, and not limitation, many forms of RAMs may be used, for example, a static random access memory (static RAM, SRAM), a dynamic random access memory (DRAM), a synchronous dynamic random access memory (synchronous DRAM, SDRAM), a double data rate synchronous dynamic random access memory (double data rate SDRAM, DDR SDRAM), an enhanced synchronous dynamic random access memory (enhanced SDRAM, ESDRAM), a synchlink dynamic random access memory (synchlink DRAM, SLDRAM), and a direct rambus random access memory (direct rambus RAM, DR RAM).

The memory 1002 stores executable program code, and the processor 1001 executes the executable program code to separately implement functions of the foregoing modules such as the receiving module and the detection module, thereby implementing the foregoing access control method based on the cloud management platform. In other words, the memory 1002 stores instructions used to perform the foregoing access control method based on the cloud management platform.

The communication interface 1003 uses a transceiver module, for example, but not limited to, a network interface card or a transceiver, to implement communication between the compute device 1000 and another device or a communication network.

In addition to a data bus, the bus 1004 may further include a power bus, a control bus, a state signal bus, and the like. The bus may be a peripheral component interconnect express (peripheral component interconnect express, PCIe) bus, an extended industry standard architecture (extended industry standard architecture, EISA) bus, a unified bus (unified bus, Ubus, or UB), a compute express link (compute express link, CXL), a cache coherent interconnect for accelerators (cache coherent interconnect for accelerators, CCIX), or the like. Buses may be classified into an address bus, a data bus, a control bus, and the like.

FIG. 11 is a diagram of a structure of a compute device cluster according to an embodiment of this application. As shown in FIG. 11, the compute device cluster 1100 includes at least one compute device 1000.

As shown in FIG. 11, the compute device cluster 1100 includes at least one compute device 1000. The memory 1002 in one or more compute devices 1000 in the compute device cluster 1100 may store same instructions used to perform the foregoing access control method based on the cloud management platform.

In some possible implementations, the memory 1002 in one or more compute devices 1000 in the compute device cluster 1100 may also separately store some instructions for performing the foregoing access control method based on the cloud management platform. In other words, a combination of one or more compute devices 1000 may jointly perform the foregoing access control method based on the cloud management platform.

It should be noted that memories 1002 in different compute devices 1000 in the compute device cluster 1100 may store different instructions, which are respectively used to perform some functions of the foregoing cloud management platform. In other words, the instructions stored in the memory 1002 in different compute devices 1000 may implement functions of one or more of the modules such as the receiving module and the detection module.

In some possible implementations, the one or more compute devices 1000 in the compute device cluster 1100 may be connected through a network. The network may be a wide area network, a local area network, or the like.

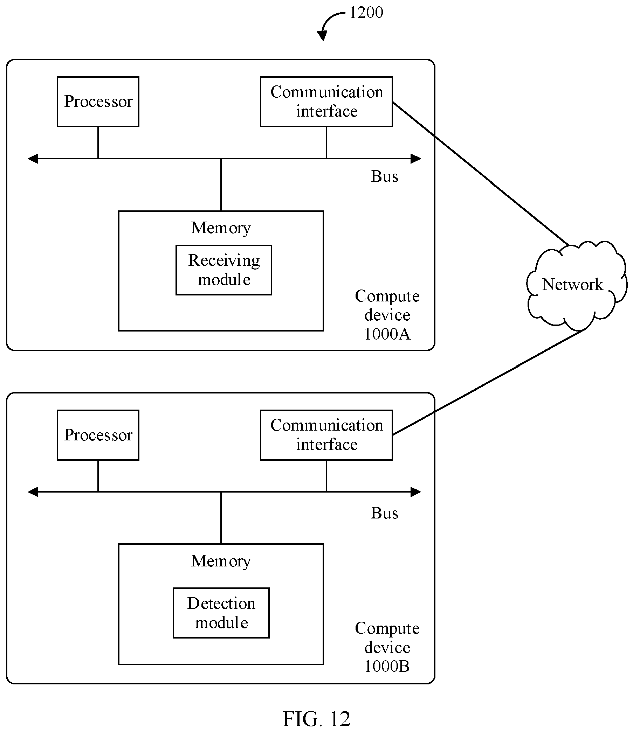

FIG. 12 is a diagram of a computer cluster in which computer devices are connected through a network according to an embodiment of this application. As shown in FIG. 12, two compute devices 1000A and 1000B are connected via a network. Specifically, each compute device is connected to the network through a communication interface in the compute device.

In a possible implementation, the memory in the compute device 1000A stores instructions for performing functions of the receiving module and the like. In addition, the memory in the compute device 1000B stores instructions for performing functions of the detection module and the like.

It should be understood that a function of the compute device 1000A shown in FIG. 12 may alternatively be completed by a plurality of compute devices. Similarly, a function of the compute device 1000B may alternatively be completed by a plurality of compute devices.

An embodiment of this application further relates to a computer storage medium. The computer-readable storage medium stores a program used for signal processing. When the program is run on a computer, the computer is enabled to perform the steps performed by the cloud management platform in the embodiment shown in FIG. 4.

An embodiment of this application further relates to a computer program product. The computer program product stores instructions. When the instructions are executed by a computer, the computer is enabled to perform the steps performed by the cloud management platform in the embodiment shown in FIG. 4.

It may be clearly understood by a person skilled in the art that, for the purpose of convenient and brief description, for a detailed working process of the foregoing system, apparatus, and unit, refer to a corresponding process in the foregoing method embodiments, and details are not described herein again.

In the several embodiments provided in this application, it should be understood that the disclosed system, apparatus, and method may be implemented in other manners. For example, the described apparatus embodiment is merely an example. For example, division into the units is merely logical function division and may be other division in actual implementation. For example, a plurality of units or components may be combined or integrated into another system, or some features may be ignored or not performed. In addition, the displayed or discussed mutual couplings or direct couplings or communication connections may be implemented by using some interfaces. The indirect couplings or communication connections between the apparatuses or units may be implemented in electronic, mechanical, or other forms.

The units described as separate parts may or may not be physically separate, and parts displayed as units may or may not be physical units, may be located in one position, or may be distributed on a plurality of network units. Some or all of the units may be selected based on actual requirements to achieve the objectives of the solutions of embodiments.

In addition, functional units in embodiments of this application may be integrated into one processing unit, or each of the units may exist alone physically, or two or more units may be integrated into one unit. The integrated unit may be implemented in a form of hardware, or may be implemented in a form of a software functional unit.

When the integrated unit is implemented in the form of the software functional unit and sold or used as an independent product, the integrated unit may be stored in a computer-readable storage medium. Based on such an understanding, the technical solutions of this application essentially, or the part contributing to the prior art, or all or some of the technical solutions may be implemented in the form of a software product. The computer software product is stored in a storage medium and includes several instructions for instructing a computer device (which may be a personal computer, a server, or a network device) to perform all or some of the steps of the methods described in embodiments of this application. The foregoing storage medium includes any medium that can store program code, such as a USB flash drive, a removable hard disk, a read-only memory (ROM, read-only memory), a random access memory (RAM, random access memory), a magnetic disk, or an optical disc.

## Claims

1. An access control method based on a cloud management platform, wherein the cloud management platform is configured to manage a plurality of cloud instances that provide a cloud service to a tenant, the plurality of cloud instances can communicate with each other based on a credential of the tenant, and the method comprises:
receiving, by the cloud management platform, a credential acquisition request sent by a first cloud instance in the plurality of cloud instances, wherein the credential acquisition request is used to indicate an access control policy for the plurality of cloud instances, the access control policy is provided by the tenant to the first cloud instance, and the access control policy is used to indicate at least one cloud instance in the plurality of cloud instances that is allowed to obtain the credential; and
detecting, by the cloud management platform based on the credential acquisition request, whether the first cloud instance is in the at least one cloud instance indicated by the access control policy, and if the first cloud instance is in the at least one cloud instance indicated by the access control policy, sending, by the cloud management platform, the credential to the first cloud instance, wherein the credential is used by the first cloud instance to access a second cloud instance in the plurality of cloud instances.

2. The method according to claim 1, wherein the access control policy is used to indicate a cloud instance trustlist set by the tenant, the cloud instance trustlist comprises at least one of the plurality of cloud instances, and detecting, by the cloud management platform based on the credential acquisition request, whether the first cloud instance is in the at least one cloud instance indicated by the access control policy comprises:
detecting, by the cloud management platform based on the credential acquisition request, whether the first cloud instance is in the cloud instance trustlist indicated by the access control policy.

3. The method according to claim 1, wherein each cloud instance comprises at least one interface, the credential acquisition request is further used to indicate an interface of the first cloud instance invoked by the tenant, the access control policy is used to indicate an interface trustlist set by the tenant, the interface trustlist comprises an interface of at least one cloud instance in the plurality of cloud instances, and detecting, by the cloud management platform based on the credential acquisition request, whether the first cloud instance is in the at least one cloud instance indicated by the access control policy comprises:
detecting, by the cloud management platform based on the credential acquisition request, whether the interface of the first cloud instance invoked by the tenant is in the interface trustlist indicated by the access control policy.

4. The method according to claim 1, wherein the access control policy is used to indicate an identity of the tenant, an identity trustlist for the first cloud instance is preset in the cloud management platform, the identity trustlist comprises a plurality of preset identities, and detecting, by the cloud management platform based on the credential acquisition request, whether the first cloud instance is in the at least one cloud instance indicated by the access control policy comprises:
detecting, by the cloud management platform based on the credential acquisition request, whether the identity indicated by the access control policy is in the identity trustlist.

5. The method according to claim 1, wherein the access control policy is used to indicate a communication duration set by the tenant and a moment at which the tenant accesses the first cloud instance, and detecting, by the cloud management platform based on the credential acquisition request, whether the first cloud instance is in the at least one cloud instance indicated by the access control policy comprises:
detecting, by the cloud management platform based on the credential acquisition request, whether a difference between the moment indicated by the access control policy and a current moment is less than the communication duration indicated by the access control policy.

6. The method according to claim 1, wherein the access control policy is used to indicate a feasible communication path set by the tenant between the tenant and the first cloud instance, and detecting, by the cloud management platform based on the credential acquisition request, whether the first cloud instance is in the at least one cloud instance indicated by the access control policy comprises:
detecting, by the cloud management platform based on the credential acquisition request, whether a current communication path between the tenant and the first cloud instance matches the feasible communication path indicated by the access control policy.

7. The method according to any one of claims 1 to 6, wherein the access control policy is further used to indicate a signature of the access control policy, the signature is obtained by the tenant performing a signing operation on the access control policy, and detecting, by the cloud management platform based on the credential acquisition request, whether the first cloud instance is in the at least one cloud instance indicated by the access control policy comprises:
performing, by the cloud management platform based on the credential acquisition request, a signature verification operation on the signature indicated by the access control policy; and
if the signature verification operation succeeds, detecting, by the cloud management platform, whether the first cloud instance is in the at least one cloud instance indicated by the access control policy.

8. The method according to any one of claims 1 to 7, wherein the plurality of cloud instances are any one of the following: a physical server, a virtual machine, a container, a micro virtual machine, and a bare metal server.

9. A cloud management platform, wherein the cloud management platform is configured to manage a plurality of cloud instances that provide a cloud service to a tenant, the plurality of cloud instances can communicate with each other based on a credential of the tenant, and the cloud management platform comprises:
a receiving module, configured to receive a credential acquisition request sent by a first cloud instance in the plurality of cloud instances, wherein the credential acquisition request is used to indicate an access control policy for the plurality of cloud instances, the access control policy is provided by the tenant to the first cloud instance, and the access control policy is used to indicate at least one cloud instance in the plurality of cloud instances that is allowed to obtain the credential; and
a detection module, configured to detect, based on the credential acquisition request, whether the first cloud instance is in the at least one cloud instance indicated by the access control policy, and if the first cloud instance is in the at least one cloud instance indicated by the access control policy, the cloud management platform is configured to send the credential to the first cloud instance, wherein the credential is used by the first cloud instance to access a second cloud instance in the plurality of cloud instances.

10. The cloud management platform according to claim 9, wherein the access control policy is used to indicate a cloud instance trustlist set by the tenant, the cloud instance trustlist comprises at least one of the plurality of cloud instances, and the detection module is configured to detect, based on the credential acquisition request, whether the first cloud instance is in the cloud instance trustlist indicated by the access control policy.

11. The cloud management platform according to claim 9, wherein each cloud instance comprises at least one interface, the credential acquisition request is further used to indicate an interface of the first cloud instance invoked by the tenant, the access control policy is used to indicate an interface trustlist set by the tenant, the interface trustlist comprises an interface of at least one cloud instance in the plurality of cloud instances, and the detection module is configured to detect, based on the credential acquisition request, whether the interface of the first cloud instance invoked by the tenant is in the interface trustlist indicated by the access control policy.

12. The cloud management platform according to claim 9, wherein the access control policy is used to indicate an identity of the tenant, an identity trustlist for the first cloud instance is preset in the cloud management platform, the identity trustlist comprises a plurality of preset identities, and the detection module is configured to detect, based on the credential acquisition request, whether the identity indicated by the access control policy is in the identity trustlist.

13. The cloud management platform according to claim 9, wherein the access control policy is used to indicate a communication duration set by the tenant and a moment at which the tenant accesses the first cloud instance, and the detection module is configured to detect, based on the credential acquisition request, whether a difference between the moment indicated by the access control policy and a current moment is less than the communication duration indicated by the access control policy.

14. The cloud management platform according to claim 9, wherein the access control policy is used to indicate a feasible communication path set by the tenant between the tenant and the first cloud instance, and the detection module is configured to detect, based on the credential acquisition request, whether a current communication path between the tenant and the first cloud instance matches the feasible communication path indicated by the access control policy.

15. The cloud management platform according to any one of claims 9 to 14, wherein the access control policy is further used to indicate a signature of the access control policy, the signature is obtained by the tenant performing a signing operation on the access control policy, and the detection module is configured to:
perform, based on the credential acquisition request, a signature verification operation on the signature indicated by the access control policy; and
if the signature verification operation succeeds, detect whether the first cloud instance is in the at least one cloud instance indicated by the access control policy.

16. The cloud management platform according to any one of claims 9 to 15, wherein the plurality of cloud instances are any one of the following: a physical server, a virtual machine, a container, a micro virtual machine, and a bare metal server.

17. A compute device cluster, wherein the compute device cluster comprises at least one compute device, and each compute device comprises a processor and a memory, wherein
the memory is configured to store instructions; and
the processor is configured to execute the instructions, so that the compute device cluster performs the method according to any one of claims 1 to 8.

18. A computer storage medium, wherein the computer storage medium stores one or more instructions, and when the instructions are executed by one or more computers, the one or more computers are enabled to perform the method according to any one of claims 1 to 8.

19. A computer program product, wherein the computer program product stores instructions, and when the instructions are executed by a computer, the computer is enabled to perform the method according to any one of claims 1 to 8.
